# EUROPÄISCHE PATENTSCHRIFT

(11) **EP 1 163 996 B1**
(45) Veröffentlichungstag und Bekanntmachung des Hinweises auf die Patenterteilung: **20.10.2004**
(21) Anmeldenummer: 01113041.6
(22) Anmeldetag: 29.05.2001
(51) Int. Cl.: B29C 51/34, B29C 51/44

(54) **Verfahren zum Herstellen eines Behälters aus einer thermoplastischen Kunststofffolie und Formwerkzeug zur Durchführung des Verfahrens**
Method for manufacturing a container from a thermoplastic foil and forming tool for performing the method
Procédé pour la fabrication d'un récipient fabriqué à partir d'une feuille en matière thermoplastique et un outil pour la mise en oeuvre de cette méthode

(30) Priorität: 17.06.2000 DE 10030010
(43) Veröffentlichungstag der Anmeldung: 19.12.2001
(73) Patentinhaber: Illig, Adolf Maschinenbau GmbH & Co., 74081 Heilbronn (DE)
(72) Erfinder: Koppenhöfer, Klaus, Cityland 10, Tower 1 (PH)

(56) Entgegenhaltungen:
- DE-A- 3 202 770
- DE-A- 4 421 870
- FR-A- 1 531 739
- GB-A- 2 079 668

## Beschreibung

Die Erfindung betrifft ein Verfahren zum Herstellen eines Behälters aus einer thermoplastischen Kunststofffolie mit einem Hohlboden, der einen doppelwandigen Standfuß bildet sowie das Formwerkzeug zur Durchführung des Verfahrens.

Aus der DE-PS 1 291 469 ist eine Vorrichtung bekannt, bei der Behälter mit Hohlboden und doppelwandigem Standfuß aus einer thermoplastischen Kunststofffolie tiefgezogen und anschließend ausgestanzt werden. Der Spalt zwischen den beiden Wänden des Standfußes ist abgedichtet, da der Behälterboden am Umfang bei der Bildung des Hohlbodens gegen eine ringsum an der Form vorgesehene Schulter gepresst wird. Bei diesem Herstellungsverfahren wird nach der Bildung des Hohlbodens und des Standfußes der Auswerferboden zurückgezogen, damit, wie es in Spalte 14 Zeilen 46 - 60 beschrieben ist, der Standfuß soweit nach innen schrumpfen kann, dass der Auswerferboden bei seiner zweiten Aufwärtsbewegung, die dem Auswerfen des Behälters dient, auf den nun im Durchmesser verkleinerten Standfuß trifft. Die Verkleinerung ist erforderlich wegen des Hinterschnittes, der durch die Schulter Pos 170 gebildet wird, und über die der Standfuß bei seinem Auswerfen geführt werden muss. Insbesondere die Figuren 11 und 12 dieser Schrift zeigen dieses entsprechende Verfahren.

Dieses Verfahren hat verschiedene Nachteile. Die gewünschte und erforderliche Kühlung des Standfußes ist unterbrochen und wesentlich verzögert, wenn der Auswerferboden zurückgezogen wird, da dieser in der Regel gekühlt ist und dadurch die erforderliche - aber nun nicht mehr gegebene - Abkühlung bewirkt. Eine weitere Kühlung des Standfußes erfolgt durch Kontakt mit der gekühlten Behälterform. Schrumpft der Standfuß aber nach innen löst er sich von der Behälterform, was die Kühlung sofort unterbindet. Die Kühlung ist aus den genannten Gründen sehr langsam, sodass nur eine geringe Taktzahl der Thermoformmaschine möglich ist, zum einen durch die schlechte Kühlung, zum anderen durch die doppelte Hubbewegung des Auswerferbodens, die zudem eine entsprechende Steuerung voraussetzt. Die Schrumpfung des Standfußes ist stark abhängig vom Kunststoffmaterial und das beschriebene Verfahren kann bei Kunststoffen mit geringem Schrumpf nicht angewendet werden.

Dass die ausgeworfenen Behälter einen sehr labilen Stand auf dem Auswerferboden haben ist insbesondere aus Figur 12 ersichtlich. Das Auswerfen und Stapeln von bereits im Formwerkzeug ausgestanzten Behältern ist damit sehr störungsanfällig und bei bestimmten Stapelverfahren nicht anwendbar, z.B. wenn der Formtisch mit der einen Hälfte des Formwerkzeuges zum Stapeln geschwenkt wird. Die Behälter werden dann schräg oder horizontal ausgeworfen und würden bei diesem Verfahren vom Auswerferboden fallen. Ein zusätzliches Ansaugen der Behälter ist nicht möglich.

Aus der EP 0 259 214 A1 ist ein Verfahren zum Herstellen von Behältern mit Hohlboden und Standfuß bekannt, bei dem der Hohlboden und damit der Standfuß durch einen zweiteiligen Formboden gebildet wird, bestehend aus Auswerferboden und Spreizzange. Die Spreizzange ist gefedert und führt beim Herstellen des Hohlbodens zusammen mit dem Auswerferboden eine Hubbewegung durch, durch die Hohlboden und Standfuß gebildet werden, wobei die Spreizzange zwar die Innenwand des Standfußes an die konische Behälterwand anlegt, aber keine Abdichtung durch eine Quetschung, vergleichbar dem Verfahren gemäß DE - PS 1 291 469, herbeiführt. Heute wird aber eine Abdichtung zwischen den beiden Wandungen des Standfußes aus verschiedenen Gründen - z.B. Weiterverwendung des Behälters, bessere Haltbarkeit von leicht verderblichem Inhalt - gefordert, damit in diesen Spalt keine eingefüllten Produkte gelangen.

Ein Nachteil dieses Verfahrens besteht ferner darin, dass das Entformen des Behälters durch eine weitere Aufwärtsbewegung des Auswerferbodens erfolgt, ohne dass die Lage der Spreizzange zuvor verändert wurde. Der Auswerferboden muss folglich den doppelwandigen Standfuß aus dem Spalt zwischen Spreizzange und Behälterform herausziehen, was eine gewisse Kraft erfordert, die zur bleibenden Deformierung des Behälters führen kann. Eine Kühlung des Standfußes an der Innenfläche ist kaum möglich, da dazu die Spreizzange Pos 16 gekühlte werden müsste, was sehr aufwendig wäre. Eine indirekte Kühlung der Spreizzange über einen gekühlten Auswerferboden ist nicht vorgesehen und wäre bei den geringen Kontaktflächen zwischen beiden Teilen nicht sehr wirkungsvoll.

Die Herstellung der Spreizzange ist teuer und das Formwerkzeug ist, bedingt durch die pro Takt erfolgende Reibung der Spreizzange mit angrenzenden Teilen im Bereich der Flächen Pos. 18, 20 bzw. 21 ,22, sehr verschleißanfällig. Die Spannzange weist zur Ausübung ihrer Funktion geschlitzte Elemente auf. In die Schlitze können Schmutz oder Kunststoffeile gelangen, was die Funktion der Spreizzange außer Kraft setzt und eine aufwendige Reinigung des Formwerkzeuges erfordert.

Aus der DE 30 24 683 ist es bekannt, Behälter mit konischem, verschweißtem Standfuß herzustellen. Um diese wegen des Hinterschnittes entformen zu können sind Teile des Formwerkzeuges senkrecht zur Mittelachse verschiebbar ausgebildet. Ein solches Formwerkzeug ist nicht mehrreihig gestaltbar.

Bei einem durch den Anmelder bekannt gewordenen Verfahren erfolgt das Bilden von Hohlboden und Standfuß durch einen verschiebbaren Auswerferboden, der von einer ringförmigen Siegeltulpe in der Breite der beiden Wandungen des Standfußes umgeben ist. Beide nehmen gemeinsam den Auswerferhub vor. Mit diesem Verfahren kann keine Abdichtung zwischen den beiden Wandungen des Standfußes erreicht werden, da hierbei keine Entformung eines Hinterschnittes möglich ist.

Der Erfindung liegt die Aufgabe zugrunde, das Verfahren so auszubilden, dass Behälter mit Hohlboden und völlig versiegeltem Standfuß in hoher Taktzahl und guter Qualität hergestellt werden können, die sich beim Herstellen in einem kombiniert formenden und stanzenden Formwerkzeug ohne Störungen in eine Stapeleinrichtung überführen lassen. Das Verfahren sollte die Formung von Behältern mit relativ großem Hinterschnitt - auch mit konischen Bereichen - am Standfuß ermöglichen. Es sollte bei geringem Verschleiß der den Hohlboden bildenden Teilen erfolgen. Eine Beschränkung des Verfahrens bezüglich des Materials der Behälter sollte nicht gegeben sein. Das Auswerfen der Behälter sollte die Gefahr einer bleibenden Deformation der Behälter vermeiden und das Formwerkzeug sollte störungsunanfällig sein gegen eine Verschmutzung. Das Verfahren sollte auch bei mehrreihigen Formwerkzeugen anwendbar sein.

Diese Aufgabe wird gelöst durch die Merkmale des Anspruches 1. Dadurch, dass der direkt gekühlte Auswerferboden des Formwerkzeuges nach dem Formen in Kontakt bleibt mit dem Behälterboden, findet dessen intensive Kühlung statt. Durch die Bildung eines Zwischenraumes zwischen Innenfläche Standfuß und Außenfläche Auswerferboden kann der Standfuß beim Auswerfen in diesen Bereich federnd nachgeben und über die Schulter geführt werden, die zur Herstellung der Abdichtung zwischen den beiden Wandungen des Standfußes dient. Dies funktioniert auch bei relativ großen Hinterschneidungen und konischen Bereichen, da in diesem Fall der Zwischenraum entsprechend größer gestaltet wird. Dadurch, dass die den Hohlboden bildenden Bauteile nur eine axiale Bewegung ausführen und nicht durch seitliche Kräfte beaufschlagt werden, ist der Verschleiß bewegter Teile gering. Da der Hohlboden auf dem Auswerferboden beim Auswerfen aufsitzt ist der Behälter dabei gut gehalten und kann bei Bedarf sogar auf diesem mit einer Vakuumeinrichtung angesaugt werden bis zum Einstapeln in die Stapeleinrichtung.
Das Formwerkzeug ist gekennzeichnet durch die Merkmale des Anspruches 2.
Hinsichtlich vorteilhafter Weiterbildungen wird auf die Unteransprüche verwiesen.

Das Verfahren ist anhand eines kombiniert formenden und stanzenden Formwerkzeuges, eingebaut in eine entsprechende Thermoformmaschine, näher beschrieben. Es kann genauso Anwendung finden bei einem nur formenden Werkzeug, dem ein Stanzwerkzeug in einer Folgestation nachgeschaltet ist. Es zeigen:

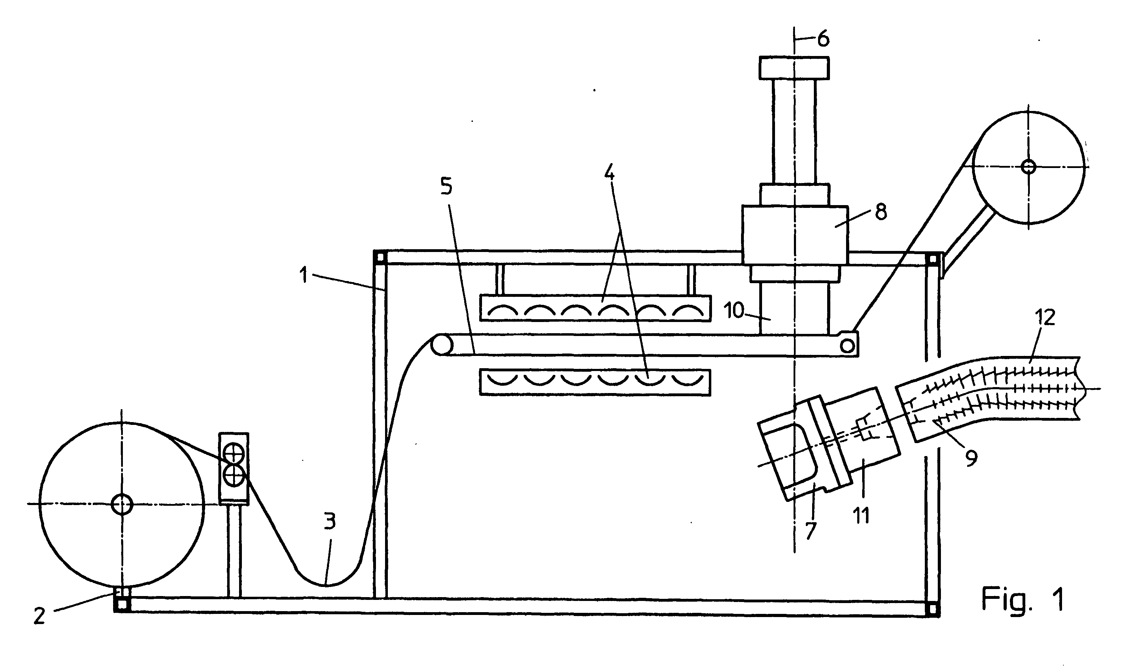

- Figur 1: eine Seitenansicht einer Thermoformmaschine zum Einbau des Formwerkzeuges.
- Figur 2: einen Schnitt durch das Formwerkzeug in zwei Phasen des Verfahrensablaufes.
- Figur 3: eine vergrößerte Darstellung eines Bereiches des Formwerkzeuges in der Phase des dritten Verfahrensablaufes und - strichpunktiert - nach dem Ausstoßen des Behälters.
- Figur 4: zwei Varianten der Gestaltung von Schnittstempel und formgebenden Teilen des Formwerkzeuges.
- Figur 5: einen Schnitt durch eine mit dem Verfahren herstellbare Gestaltung eines Behälters.
- Figur 6: einen Schnitt gemäß Figur 2 mit einer Variante des Antriebes des Auswerferbodens.

In einem Gestell 1 sind die wesentlichen Teile der Thermoformmaschine untergebracht, in die das Formwerkzeug zur Durchführung des Verfahrens eingebaut wird. Eine Rollenaufnahme 2 steht eingangsseitig und entfällt, wenn die zu verformende Kunststofffolie 3 aus thermoplastischem Kunststoff direkt von einem Extruder zugeführt wird. Auch die Heizeinrichtung 4 ist bei Extruderverkettung eventuell nicht erforderlich. Eine intermittierend betriebene Transporteinrichtung 5 führt die Kunststofffolie 3 zu einer Formstation 6 mit Untertisch 7 und Obertisch 8, in der mittels Druckluft oder Vakuum Behälter 9 mittels des Formwerkzeuges, bestehend aus Oberteil 10 und Unterteil 11, geformt und ausgestanzt werden. Nach dem Absenken und ggf. Schwenken des Formtisches 7 mit dem formgebenden Unterteil 11 werden die Behälter 9 in Stapelrinnen 12 ausgestoßen oder in entsprechende Nachfolgeeinrichtungen übergeben.

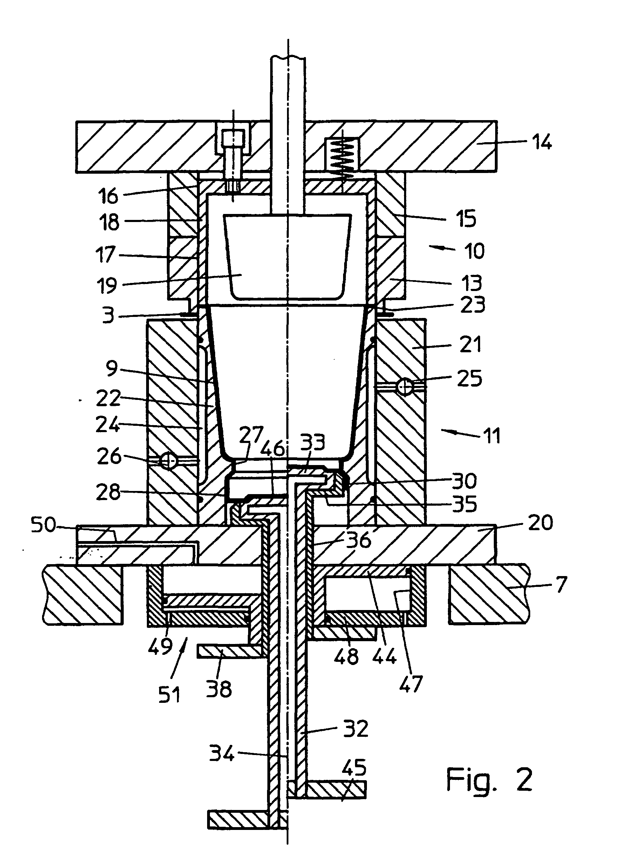

Figur 2 zeigt den Aufbau des Formwerkzeuges. Das Oberteil 10 setzt sich zusammen aus der Matrize 13, der Kopfplatte 14 und der Zwischenplatte 15, in die die einzelnen Formnester eingearbeitet sind - einreihig wie dargestellt oder mehrreihig. Matrize 13 und Zwischenplatte 15 weisen Bohrungen 16, 17 auf, in denen ein verschiebbarer Niederhalter 18 angeordnet ist. Im Niederhalter 18 sitzt ein verschiebbarer Streckhelfer 19.

Das Unterteil 11 besteht aus einer Grundplatte 20, einem Kühlblock 21 und in diesen eingesetzte Schnittstempel 22 mit der Form der herzustellenden Behälter 9 und mit einer Schnittkante 23, die im Zusammenwirken mit der Matrize 13 den Behälter 9 nach dem Formen ausstanzt. Zwischen Schnittstempel 22 und Kühlblock 21 ist eine Kammer 24 zur Durchleitung von Kühlwasser vorgesehen, das über Bohrungen 25, 26 zu- bzw. abgeführt wird. Im Bodenbereich weist die Innenform des Schnittstempels 22 eine ringsum verlaufende Schulter 27 auf, die sich in einem vergrößerten Bereich 28 fortsetzt. Die Vergrößerung entspricht mindestens der Wandstärke einer Wandung 29 des zu bildenden Standfußes 30, so dass ein Hinterschnitt mit einer Quetschkante 31 gebildet wird.
Im Bodenbereich jedes Formnestes sitzt an einer Stange 32 ein verschiebbarer Formboden 33, der im Innem über eine oder mehrere Bohrungen 34 von Kühlwasser durchströmt wird. Alle Stangen 32 sind an einer Auswerferplatte 45 befestigt, die über einen nicht dargestellten Antrieb in bekannter Weise verschoben werden kann. Um den Formboden 33 herum ist eine Siegeltulpe 35 angeordnet, sie ist zu diesem über einen Antrieb 51 verschiebbar ausgebildet, in dem diese Siegeltulpe 35 über ein Rohr 36 nach unten durch die Grundplatte 20 geführt und an einer Halteplatte 38 befestigt ist. Auf der Halteplatte 38 sitzt ein Kolben 44, der in der Bohrung 47 in der an der Grundplatte 20 befestigten Platte 48 gleitend und dichtend geführt ist. Durch Druckluftzufuhr über Bohrungen 49, 50 in Platte 48 bzw. Grundplatte 20 können der Kolben 44 und damit die Siegeltulpe 35 verschoben werden. Der Außendurchmesser der Siegeltulpe 35 ist geringfügig größer als der Öffnungsquerschnitt der Schulter 27.

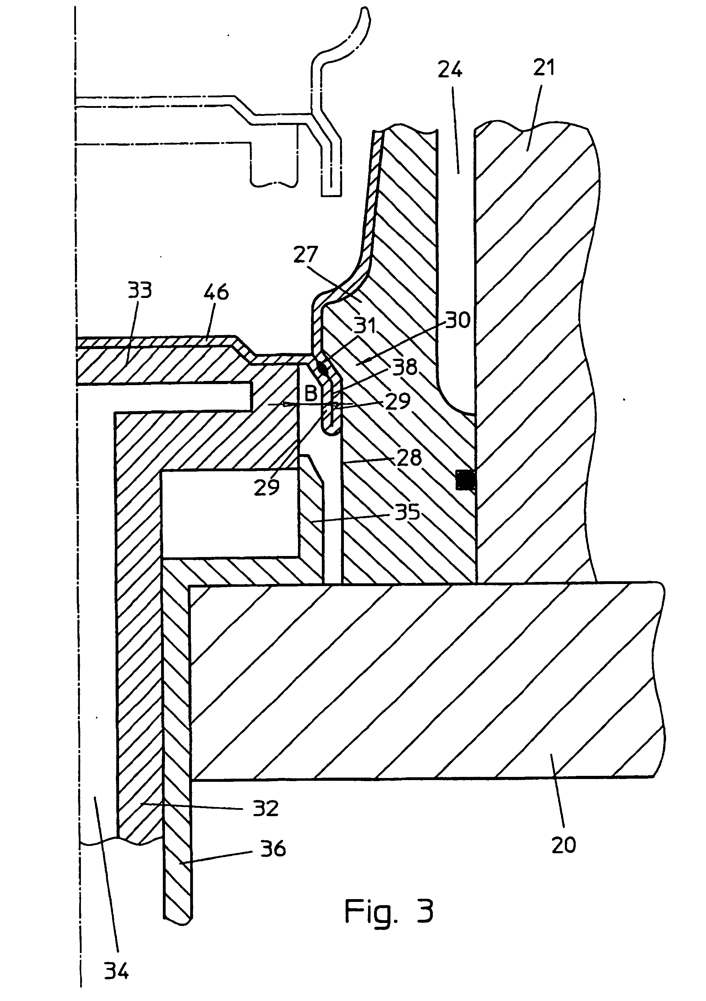

Wenn alle Stangen 32 wie in Figur 2 dargestellt an der Auswerferplatte 45 befestigt sind wird vorausgesetzt, dass durch die Aufwärtsbewegung der Siegeltulpe 35 zur Formung des Standfußes 30 der Formboden 33 mitgenommen wird und beide so gestaltet sind, dass sie in zusammengefahrenem Zustand dem Behälterboden 46 die endgültige Gestalt verleihen. Bei der Abwärtsbewegung der Siegeltulpe 35 in die in Figur 3 gezeigte Lage bleibt der Formboden 33 stehen. Dieser gekoppelte Bewegungsablauf beim Formen des Standfußes 30 bzw. entkoppelter Bewegungsablauf beim Abwärtsbewegen der Siegeltulpe 35 setzt einen entsprechenden Antrieb der Auswerferplatte 45 voraus, der während der Abwärtsbewegung der Siegeltulpe 35 über den Antrieb 51 den Formboden 33 oben hält und dann den erforderlichen Auswerferhub bei geöffnetem Formwerkzeug durchführt. Durch eine entsprechend gestaltete Auswerferkurve ist dieser Bewegungsablauf der Auswerferplatte 45 relativ einfach zu erreichen.

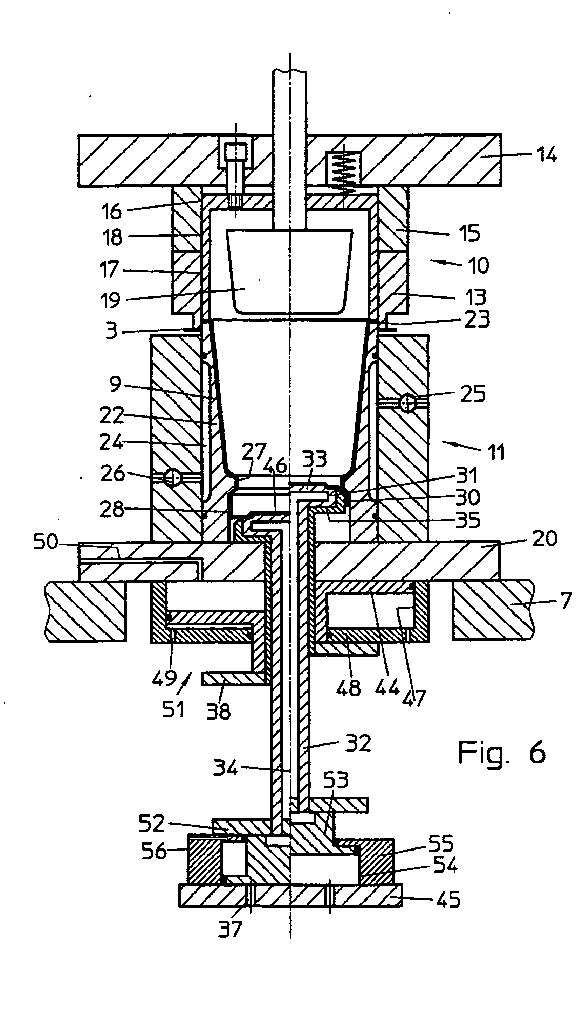

Bei einem pneumatischen Antrieb für die Auswerferplatte 45 ist dieser Ablauf schwieriger zu erreichen, da dieser nur zwei Endlagen einnimmt. Die Auswerferplatte 45 sollte also während der Formung des Standfußes 30 und während der Abwärtsbewegung der Siegeltulpe 35 lagemäßig nicht verändert werden. Dies kann erreicht werden durch die in Figur 6 dargestellte Gestaltung der Auswerferplatte 45. In diesem Fall sitzen die Stangen 32 nicht direkt an der Auswerferplatte 45 sondern an einer Trägerplatte 52, die ferner einen Kolben 53 trägt, der in einer Bohrung 54 gleitet. Diese Bohrung 54 sitzt in einem Aufsatz 55, der mit der Auswerferplatte 45 verbunden ist. Eine Druckluftzufuhr auf die Unterseite des Kolbens 53 ist über eine Bohrung 37, auf die Oberseite über die Bohrung 56 vorgesehen.

Es findet folgender Verfahrensablauf statt:

Nach dem Eintransport eines erwärmten Abschnittes der Kunststofffolie 3 in die Formstation 6 schließt das Formwerkzeug. Durch Druckluftzuleitung und ggf. mechanische Vorstreckung über den Streckhelfer 19 wird der Behälter 9 geformt, wobei der spätere Hohlboden wie in Figur 2 links dargestellt vorgeformt wird. Die Bildung des Hohlbodens erfolgt (Figur 2 rechts) durch eine gemeinsame Axialbewegung von Formboden 33 und Siegeltulpe 35. Der in der Siegeltulpe 35 sitzende Formboden 33 wird durch die Hubbewegung der Siegeltulpe 35 mitgenommen (Ausführung Figur 2, Lage der Auswerferplatte 45 verändert sich) oder durch Druckluftzuführ über die Bohrung 56 (Ausführung Figur 6, Lage der Auswerferplatte 45 bleibt) herbeigeführt. Dadurch wird die Seitenwand umgestülpt und durch Anpressen der Stirnfläche der Siegeltulpe 35 gegen die Quetschkante 31 eine Abdichtung des Spaltes des geformten doppelwandigen Standfußes 30 herbeigeführt. Nach einer vorgegebenen Kühlzeit entweicht die Formluft und der Behälter 9 wird durch eine geringe Schließbewegung des Formwerkzeuges ausgestanzt, danach öffnet das Formwerkzeug und die Siegeltulpe 35 wird zurückgeführt in die in Figur 3 dargestellte Lage. Es entsteht dadurch ein Spalt in der Breite B zwischen Innenfläche des Standfußes 30 und Außenfläche des Formbodens 33. Zum Auswerfen des Behälters 9 wird der Formboden 33 ausgeschoben und der Hinterschnitt des Standfußes 30 gleitet über die Quetschkante 31 hinweg, da der Standfuß 30 nach innen in den freien Raum mit der Breite B federnd nachgeben kann (Lage strichpunktiert in Figur 3). Nach dem Auswerfen der Behälter 9 fährt der Formboden 33 wieder in Ausgangslage (kurvengesteuert Ausführung Figur 2 links oder pneumatisch bei Ausführung nach Figur 6), der nächste Takt wird durchgeführt.

Eine direkte Kühlung der Siegeltulpe 35 scheitert in der Regel aus verschiedenen Gründen. Wenn aber Formboden 33 und Siegeltulpe 35 über eine zylindrische Passung mit engem Spiel zueinander geführt sind, erfolgt eine indirekte Kühlung der Siegeltulpe 35 über den gekühlten Formboden 33, mit der diese ständig in Berührung steht.

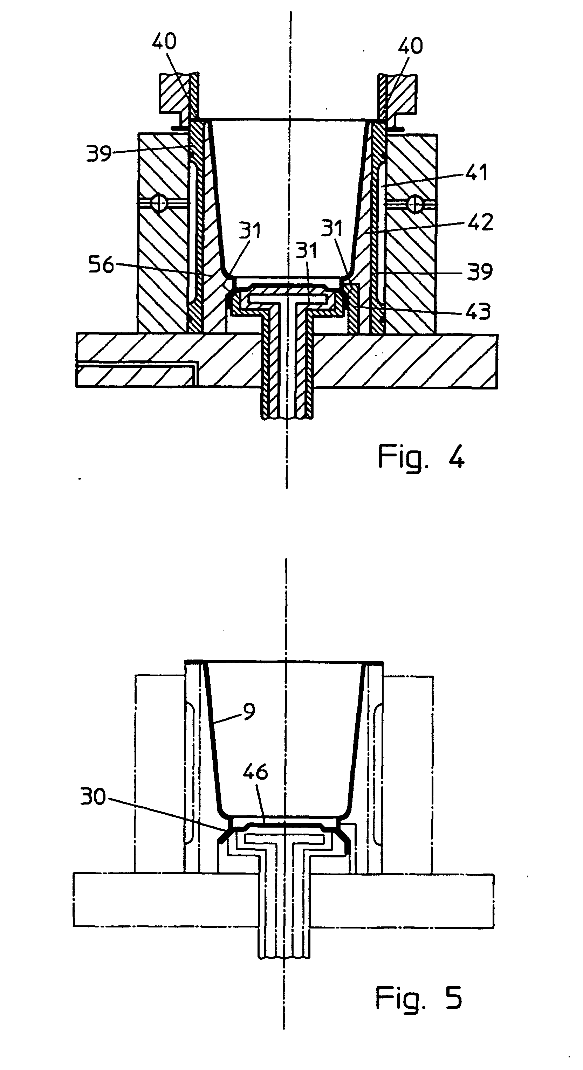

In den Figuren 2 und 3 ist der Schnittstempel 22 so aus einem Stück hergestellt, dass er sowohl auf der Innenseite die Form des Behälters 9 bildet als auch die Quetschkante 31 eingearbeitet ist. In bestimmten Fällen ist es vorteilhaft - wie in Figur 4 rechts dargestellt - in einen Schnittstempel 39 mit Schnittkante 40 und Kammer 41 einen Formeinsatz 42 einzusetzen, wobei dieser vorzugsweise aus Aluminium besteht. Zur Bildung einer verschleißfesten Quetschkante 31 wird in diesem Fall vorgeschlagen, einen Ring 43, vorzugsweise aus gehärtetem Stahl, in den Formeinsatz 42 einzusetzen. Eine andere Lösung ist eine Zweiteilung in der Form, dass in den Schnittstempel 39 ein einstückiger Formeinsatz 56 aus gehärtetem Stahl mit angeformter Quetschkante 31 eingesetzt ist.

Figur 5 zeigt einen Hohlbodenbecher, bei dem der Standfuß 30 leicht konisch gestaltet ist ( Figur 5 links ), wobei sich ein zylindrisch gestalteter Bereich anschließen kann (Figur 5 rechts) und wie er mit dem erfindungsgemäßen Verfahren herstellbar ist. Die Gestaltung des Formwerkzeuges ist strichpunktiert angedeutet. Hohlbodenbecher mit dieser Gestaltung des Standfußes 30 können mit den bekannten Verfahren nur mittels geteilter Formen tiefgezogen und entformt, in einem separaten Werkzeug zusätzlich bearbeitet oder im teureren Spritzgussverfahren hergestellt werden.

## Patentansprüche

1. Verfahren zum Herstellen eines Behälters (9) aus einer erwärmten thermoplastischen Kunststofffolie (3), bei dem
a) ein Abschnitt der Kunststofffolie (3) durch Schließen eines Formwerkzeuges, bestehend aus Oberteil (10) und Unterteil (11) eingespannt,
b) der Behälter (9) durch Differenzdruck verformt,
c) der Behälterboden (46) entgegen der Verformungsrichtung der Kunststofffolie (3) beim Tiefziehen eingestülpt und dadurch ein Standfuß (30) geformt wird,
d) der Behälterboden (46) am Ende des Einstülpvorganges ringsum mittels der Stimfläche einer Siegeltulpe (35) gegen eine an einem Schnittstempel (22) angeordnete Quetschkante (31) gedrückt wird, die innen im den Standfuß (30) formenden Bereich angeordnet ist,
e) ein Freiraum in der Breite (B) zwischen der Innenfläche des Standfußes (30) und der Außenfläche des Formbodens (33) durch axiales Zurückziehen der Siegeltulpe (35) geschaffen wird und
f) der Behälter (9) durch Schieben des Standfußes (30) über die Quetschkante (31) unter dessen federndem Nachgeben in Richtung der Außenfläche des Formbodens (33) aus dem Unterteil (11) ausgeworfen wird.

2. Formwerkzeug zur Durchführung des Verfahrens zum Herstellen eines Behälters (9) aus einer erwärmten thermoplastischen Kunststofffolie (3) durch Tiefziehen, bestehend aus
a) einem Oberteil (10) mit einer Druckluftzuführung,
b) einem Unterteil (11) mit mindestens einem Schnittstempel (22) entsprechend der Gestalt des herzustellenden Behälters (9),
c) der auf seiner Innenseite im den Standfuß (30) formenden Bereich eine ringsum verlaufende Quetschkante (31) aufweist,
d) einem axial verschiebbaren Formboden (33) und einer ihn umgebenden Siegeltulpe (35),
e) wobei die Stirnfläche der Siegeltulpe (35) mit der Quetschkante (31) zusammenwirkt und
f) die mit einem Antrieb (51) zu ihrer axialen Verschiebung relativ zum Formboden (33) in Wirkverbindung steht.

3. Formwerkzeug nach Anspruch 2, **dadurch gekennzeichnet, dass** Formboden (33) und Siegeltulpe (31) über eine zylindrische Passung axial zueinander geführt sind.

4. Formwerkzeug nach Anspruch 2 oder 3, **dadurch gekennzeichnet, dass** der Antrieb (51) an einer Halteplatte (38) angreift, mit der alle Siegeltulpen (35) des Formwerkzeuges verbunden sind.

5. Formwerkzeug nach Anspruch 4, **dadurch gekennzeichnet, dass** die Halteplatte (38) mit einem Kolben (44) verbunden ist, der in einer Bohrung (47) in einer mit der Grundplatte (20) verbundenen Platte (48) verschiebbar ist.

6. Formwerkzeug nach einem der Ansprüche 2 bis 5, **dadurch gekennzeichnet dass** alle Stangen (32) starr mit einer Auswerferplatte (45) verbunden sind.

7. Formwerkzeug nach einem der Ansprüche 2 bis 5, **dadurch gekennzeichnet, dass** alle Stangen (32) starr mit einer zur Auswerferplatte (45) verschiebbaren Trägerplatte (52) verbunden sind.

8. Formwerkzeug nach Anspruch 7, **dadurch gekennzeichnet, dass** die Trägerplatte (52) mit einem Kolben (53) verbunden ist, der in einer Bohrung (54) in einem Aufsatz (55) verschiebbar ist, der an der Auswerferplatte (45) befestigt ist.

9. Formwerkzeug nach einem der Ansprüche 2 bis 8, **dadurch gekennzeichnet, dass** die formgebenden Teile aus einem Schnittstempel (39) mit Schnittkante (40) und einem eingesetztem Formeinsatz (56) mit einer Quetschkante (31) bestehen.

10. Formwerkzeug nach einem der Ansprüche 2 bis 8, **dadurch gekennzeichnet, dass** die formgebenden Teile aus einem Schnittstempel (39) mit Schnittkante (40), einem eingesetzten Formeinsatz (42) und einem Ring (43) mit einer Quetschkante (31) bestehen.

11. Formwerkzeug nach Anspruch 10, **dadurch gekennzeichnet, dass** der Ring (43) aus gehärtetem Stahl besteht.

## Claims

1. A method for manufacturing a container (9) from a heated thermoplastic plastic film (3), wherein
a) a section of the plastic film (3) is clamped in position by..closing a moulding tool consisting of an upper part (10) and a lower part (11),
b) the container (9) is shaped by means of a differential pressure,
c) the container bottom (46) is reverse-drawn opposite to the direction of deformation of the plastic film (3) during the swedging process such that a supporting base (30) is formed,
d) the container bottom (46) is circumferentially pressed against a squash (31) arranged on a clipping punch (22) with the end face of a sealing member (35) at the end of the reverse-drawing process, with the squash being arranged on the inside in the region that forms the supporting base (30),
e) a clearance of the width (B) between the inner surface of the supporting base (30) and the outer surface of the mould bottom (33) is created by axially retracting the sealing member (35), and
f) the container (9) is ejected from the lower part (11) by sliding the supporting base (30) over the squash (31) such that it springably yields in the direction of the outer surface of the mould bottom (33).

2. A moulding tool for carrying out the method for manufacturing a container (9) from a heated thermoplastic plastic film (3) by means of swedging, consisting of
a) an upper part (10) with a compressed air supply,
b) a lower part (11) with at least one clipping punch (22) that has the shape of the container (9) to be manufactured
c) and contains a circumferentially extending squash (31) on its inner side in the region. that forms the supporting base (30),
d) an axially displaceable mould bottom (33) and a sealing member (35) that surrounds said mould bottom,
e) wherein the end face of the sealing member (35) cooperates with the squash (31) and
f) is functionally connected to a drive (51) in order to realize its axial displacement relative to the mould bottom (33).

3. The moulding tool according to Claim 2, **characterized in that** the mould bottom (33) and the sealing member (31) are axially guided relative to one another by means of a cylindrical fit.

4. The moulding tool according to Claim 2 or 3, **characterized in that** the drive (51) engages on a holding plate (38), wherein all sealing members (35) of the moulding tool are connected to said holding plate.

5. The moulding tool according to Claim 4, **characterized in that** the holding plate (38) is connected to a piston (44) that can be displaced in a bore (47) in a plate (48) that is connected to the base plate (20).

6. The moulding tool according to one of Claims 2-5, **characterized in that** all rods (32) are rigidly connected to an ejector plate (45).

7. The moulding tool according to one of Claims 2-5, **characterized in that** all rods (32) are rigidly connected to a carrier plate (52) that can be displaced relative to the ejector plate (45).

8. The moulding tool according to Claim 7, **characterized in that** the carrier plate (52) is connected to a piston (53) that can be displaced in a bore (54) in an attachment (55) mounted on the ejector plate (45).

9. The moulding tool according to one of Claims 2-8, **characterized in that** the mould sections consist of a clipping punch (39) with a cutting edge (40) and an inserted mould insert (56) with a squash (31).

10. The moulding tool according to one of Claims 2-8, **characterized in that** the mould sections consist of a clipping punch (39) with a cutting edge (40), an inserted mould insert (42) and a ring (43) with a squash (31).

11. The moulding tool according to Claim 10, **characterized in that** the ring (43) consists of hardened steel.

## Revendications

1. Procédé de fabrication d'un récipient (9) en film de matière plastique thermoplastique chauffé (3), dans lequel
a) une section du film de matière plastique (3) est enserrée par fermeture d'un outil de moulage, consistant en une partie supérieure (10) et une partie inférieure (11),
b) le récipient (9) est façonné par pression différentielle,
c) le corps de récipient (46) est embouti par retournement à l'inverse du sens de façonnage du film en matière plastique (3) par emboutissage et qu'on forme ainsi un pied d'appui (30),
d) le fond du récipient (46), à la fin de l'opération d'emboutissage par retournement, est comprimé tout autour au moyen de la surface frontale d'une couronne de scellement (35) contre une arête d'aplatissage (31) disposée sur un poinçon d'ébavurage (22) et qui se trouve à l'intérieur dans la zone formant le pied d'appui (30),
e) un espace est créé dans la largeur (B) entre la surface intérieure du pied d'appui (30) et la surface extérieure du fond du moule (33) par retrait axial de la couronne de scellement (35) et
f) que le récipient (9) est éjecté de la partie inférieure (11) en poussant le pied d'appui (30) au dessus du bord d'aplatissage (31), en se détendant élastiquement en direction de la surface extérieure du fond du moule (33).

2. Outillage de moulage pour la réalisation du procédé de fabrication d'un récipient (9) en film de matière plastique thermoplastique chauffé (3) par emboutissage, consistant en
a) une partie supérieure (10) comportant une alimentation en air comprimé,
b) une partie inférieure (11) comportant au moins un poinçon d'ébavurage (22) correspondant à la forme du récipient à fabriquer (9),
c) qui présente sur sa face intérieure, dans la zone formant le pied d'appui (30), une arête d'aplatissage (31) s'étendant tout autour,
d) un fond de moule déplaçable axialement (33) et une couronne de scellement (35) l'entourant,
e) la surface frontale de la couronne de scellement (35) coopérant avec l'arête d'aplatissage (31) et
f) qui est en liaison opérationnelle avec une propulsion (51) assurant son déplacement axial par rapport au fond du moule (33).

3. Outillage de moulage selon la revendication 2, **caractérisé en ce que** le fond de moule (33) et la couronne de scellement (31) sont guidés axialement l'un par rapport à l'autre par un ajustage cylindrique.

4. Outillage de moulage selon la revendication 2 ou 3, **caractérisé en ce que** la propulsion (51) s'engrène sur une plaque de retenue (38) à laquelle sont reliées toutes les couronnes de scellement (35) de l'outillage de moulage.

5. Outillage de moulage selon la revendication 4,
**caractérisé en ce que** la plaque de retenue (38) est reliée à un piston (44) qui est déplaçable dans un alésage (47) pratiqué dans une plaque (48) reliée à la plaque de base (20).

6. Outillage de moulage selon l'une quelconque des revendications 2 à 5, **caractérisé en ce que** toutes les barres (32) sont reliées rigidement à une plaque d'éjection (45).

7. Outillage de moulage selon l'une quelconque des revendications 2 à 5, **caractérisé en ce que** toutes les barres (32) sont reliées rigidement à une plaque support (52) déplaçable vers la plaque d'éjection (45).

8. Outillage de moulage selon la revendication 7,
**caractérisé en ce que** la plaque support (52) est reliée à un piston (53) qui est déplaçable dans un alésage (54) pratiqué dans une garniture (55) qui est fixée sur la plaque d'éjection (45).

9. Outillage de moulage selon l'une quelconque des revendications 2 à 8, **caractérisé en ce que** les pièces de façonnage consistent en un poinçon d'ébavurage (39) présentant une arête de coupe (40) et en une garniture de formage insérée (56) présentant une arête d'aplatissage (31).

10. Outillage de moulage selon l'une quelconque des revendications 2 à 8, **caractérisé en ce que** les pièces de façonnage consistent en un poinçon d'ébavurage (39) présentant une arête de coupe (40), une garniture de moule insérée (42) et une bague (43) présentant une arête d'aplatissage (31).

11. Outillage de moulage selon la revendication 10, **caractérisé en ce que** la bague (43) est en acier trempé.
